# EUROPEAN PATENT SPECIFICATION

(11) **EP 3 597 377 B1**
(45) Date of publication and mention of the grant of the patent: **15.10.2025**
(21) Application number: 19179261.3
(22) Date of filing: 10.06.2019
(51) Int. Cl.: B25J 15/06

(54) **APPARATUS AND METHOD FOR MANIPULATING FLOW PACK PACKAGING OF LONG PASTA**
VORRICHTUNG UND VERFAHREN ZUR MANIPULATION DER FLOWPACK-VERPACKUNG VON LANGEN TEIGWAREN
APPAREIL ET PROCÉDÉ DE MANIPULATION D'EMBALLAGE DE SACS THERMOSOUDÉS DE PÂTES LONGUES

(30) Priority: 11.06.2018 IT 201800006183
(43) Date of publication of application: 22.01.2020
(73) Proprietor: GEO PROJECT INDUSTRIES S.R.L., 35015 Galliera Veneta, Padova (IT)
(72) Inventor: TRENTO, Maurizio, 35015 Galliera Veneta, PADOVA (IT); LOVISETTO, Gianluca, 35015 Galliera Veneta, PADOVA (IT)
(74) Representative: Zanettin, Gianluigi

(56) References cited:
- EP-A1- 3 552 978
- WO-A1-2015/121668
- JP-A- S6 044 485
- US-A1- 2009 066 098
- US-A1- 2009 320 417
- US-A1- 2013 004 286
- US-A1- 2017 266 817
- US-B1- 9 457 477

## Description

### Field of application

The present invention is an apparatus and a method for manipulating flow pack packaging of long pasta, in particular spaghetti.

A flow pack is a type of plastic packaging for food products made with the aid of a packaging machine, which in particular can operate horizontally or vertically. The film that forms the packaging is arranged so as to surround the product; a first device welds the two longitudinal ends of the film sheet, while two welding heads (or a double welding head) weld the head and tail of the packaging, completing the package. The film of a flow pack does not completely adhere to the internal product. In other words, the film is not completely stretched, but may be slightly loose.

By "manipulation" it is meant in general any operation aimed at modifying the position of an object, and requires a stable gripping action exerted on the object itself. In particular, the manipulation of flow pack packaging can be aimed at transferring a packaging from a conveyor line (conveyor belt) to a packing carton, or also at arranging spatially in an orderly manner (preforming) the packs on the conveyor line upstream of the packaging station.

The apparatus and the method according to the invention allow in particular to carry out manipulations of flow packs of long pasta which provide for the weight transport of the flow pack packaging to transfer them from one position to another.

The apparatus and the method according to the invention allow the manipulation of flow pack packing of long pasta, in particular spaghetti, ensuring efficacy and at the same time delicacy in the gripping action, thus allowing a correct management of a product (long pasta) which is inherently fragile and which in its integrity has much of its value.

### Prior art

As is known, long pasta, particularly spaghetti, is inherently fragile and must be handled very gently, since its full value lies in its integrity. Spaghetti packages that are even partially broken are difficult to sell at full price.

For this reason, particular attention is paid to the design of transport and packaging lines for flow pack packaging of long pasta.

Normally, the transfer of the packages from the transport line (conveyor belt) to the packaging boxes is carried out by fall through tilting system, with devices suitable for slowing the fall of the packages inside the box. In particular, vacuum gripping devices are used as devices for guiding and slowing down the fall.

Operationally, such vacuum gripping devices are not sized to support the weight of the packages (i.e. to exert a stable grip), but only to exert a mild gripping action (unstable grip) suitable for partially counteracting the falling movement, so as to slow it down and mitigate the impact of the packages inside the box. Therefore, these gripping devices do not perform a manipulation function of the packages.

For other types of products packaged in flow packs, such as candy packs, chips, chocolates, vacuum gripping devices can be used to transfer weight from the conveying line to the packaging box. In this case, the gripping devices are sized to fully support the weight of the packages.

In the case of flow pack packaging of long pasta, the transfer of the packages cannot, on the other hand, be completely entrusted to vacuum gripping heads. In fact, due to the weight of the pasta, the elongated dimensions of the packages and the high speed with which the transfer operation must be carried out, in order to ensure an effective and safe gripping action, the vacuum level to be exercised on the flow pack film would be so high that in many cases the film would be torn and the pasta broken.

The impossibility of using vacuum gripping devices to handle flow pack packaging of long pasta significantly reduces the operational flexibility in handling these packages. This also affects the layout of the systems, which must necessarily be equipped with tilting fall systems.

In the sector of packaging of long pasta, there is therefore the need to have an apparatus and a method for manipulating flow pack packaging of long pasta, in particular spaghetti, which completely or at least partially overcome the limits set out above of the prior art solutions, and in particular that allow manipulating in a more flexible manner the flow pack packaging of pasta using vacuum gripping devices. WO2015/121668A1, US2009/320417A1 and EP3552978A1 disclose a vacuum gripping head according to the prior art,

### Disclosure of the invention

Therefore, the object of the present invention is to eliminate all or part of the drawbacks of the aforementioned prior art by providing an apparatus and a method for manipulating flow pack packaging of long pasta, in particular spaghetti, which allows manipulating in a more flexible manner such packaging using vacuum gripping devices, without however limiting the speed of the operations, nor causing tears to the film or breaking of the pasta.

A further object of the present invention is to provide an apparatus for manipulating flow pack packaging of long pasta, in particular spaghetti, which is easily manageable from an operational point of view.

A further object of the present invention is to provide an apparatus for manipulating flow pack packaging of long pasta, particularly spaghetti, which is simple and cost-effective to make.

### Brief description of the drawings

The technical features of the invention, according to the aforesaid aims, can clearly be seen in the content of the claims below, and its advantages will become more readily apparent in the detailed description that follows, made with reference to the accompanying drawings, which illustrate one or more purely exemplary and non-limiting embodiments thereof, in which:
- Figure 1 shows an apparatus for manipulating flow pack packaging of long pasta according to a first embodiment of the invention;
- Figure 2 shows an apparatus for manipulating flow pack packaging of long pasta according to a different embodiment of the invention;
- Figure 3 shows a top perspective view of a detail of the apparatus of Figures 1 and 2 relating to a vacuum gripping head in double version;
- Figure 4 shows a bottom perspective view of the gripping head shown in Figure 3;
- Figure 5 shows a lateral orthogonal view of the gripping head shown in Figure 3, according to the arrow V indicated therein;
- Figure 6 shows a front orthogonal view of the gripping head shown in Figure 3, according to the arrow VI indicated therein;
- Figure 7 shows a top orthogonal view of the gripping head shown in Figure 3, according to the arrow VII indicated therein;
- Figure 8 shows a sectional view of the gripping head shown in Figure 5, according to the section plane VIII - VIII indicated therein;
- Figures 9a, 9b and 9c show in sequence the steps of gripping two flow pack packaging of long pasta with the vacuum gripping head shown in Figures 3-8;
- Figures 10a, 10b and 10c show in a sequence the steps of gripping a flow pack packaging of long pasta by a vacuum gripping head in single version, alternative to the double gripping head shown in Figures 3-8.

### Detailed description

With reference to the accompanying drawings, an apparatus for manipulating flow pack packaging of long pasta, in particular spaghetti, according to the invention has been indicated as a whole with reference numeral 1.

For simplicity of description, the manipulation method according to the invention will be described after to the manipulation apparatus 1, referring in particular to the latter.

Herein and in the following description and in the claims, reference will be made to the manipulation apparatus in the condition of use. Therefore, any references to a lower or upper position or to a horizontal or vertical orientation should be interpreted in such condition.

According to a general embodiment of the invention, the apparatus 1 comprises:
- at least one vacuum gripping head 11 or 12 designed to hold at least one packaging FP of long pasta at a time; and
- a movement system 100, which is associated with said at least one vacuum gripping head 11 or 12 and is suitable to move it in space.

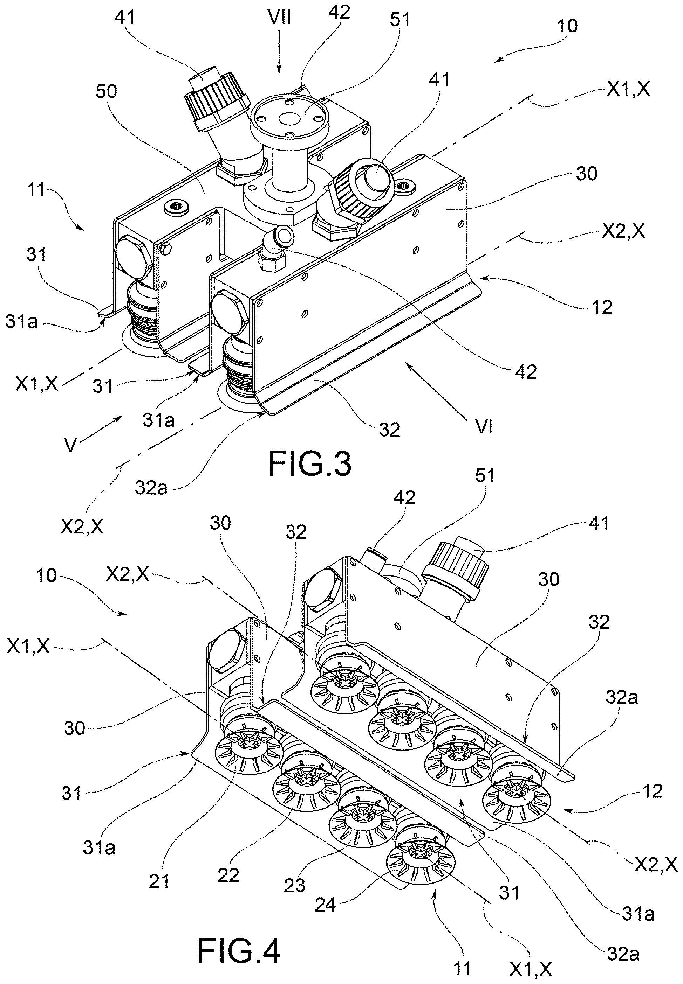

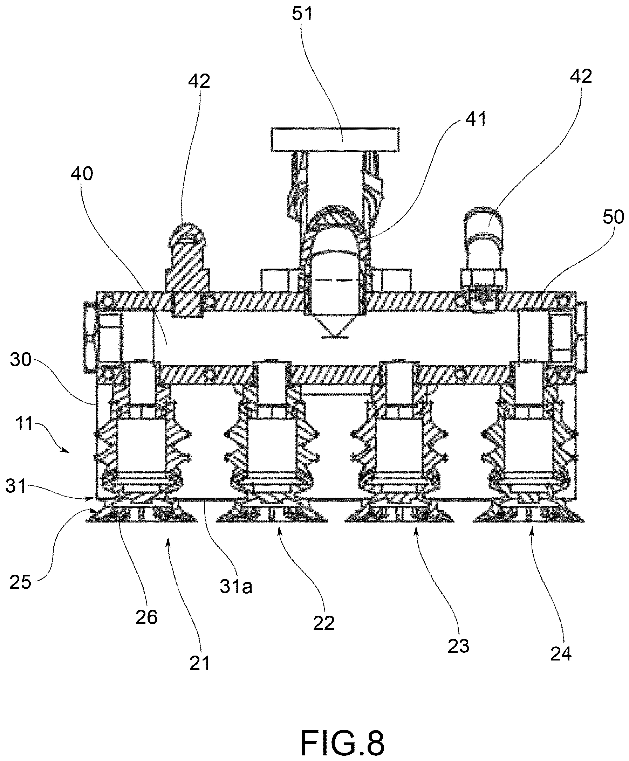

As shown in particular in Figures 4 and 8, the aforementioned at least one vacuum gripping head 11 or 12 comprises one or more vacuum suction cups 21, 22, 23, 24 which define a vacuum gripping surface extending along a longitudinal axis X of said at least one vacuum gripping head 11 or 12.

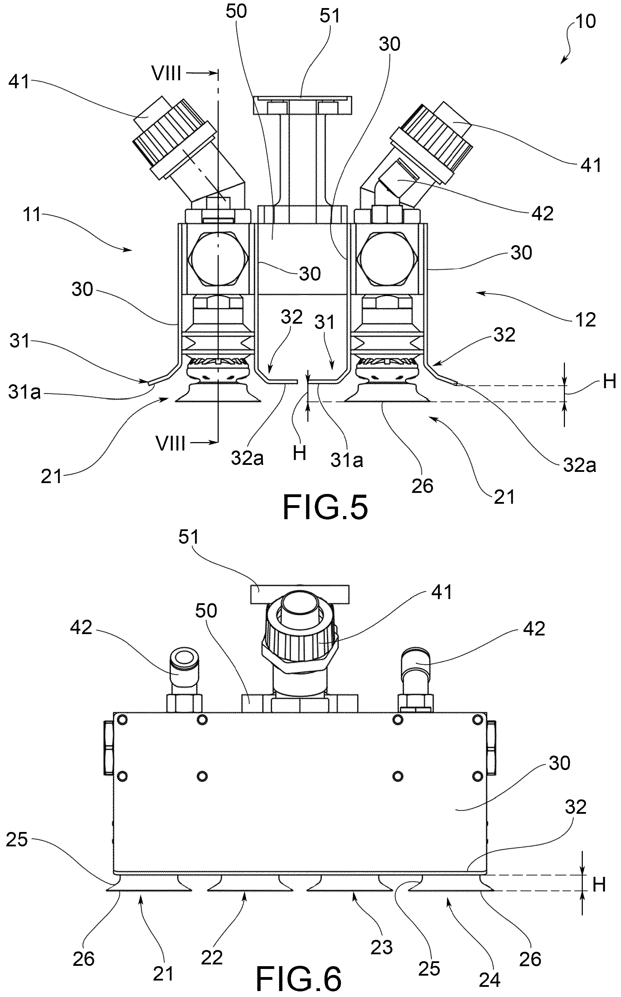

As shown in particular in Figures 4 and 5, the aforementioned at least one vacuum gripping head 11 or 12 further comprises two profiles 31, 32 extending longitudinally sideways to the aforementioned gripping surface, to define two longitudinal lateral abutment surfaces 31a and 32a for a flow pack packaging FP supported in gripping by the aforesaid one or more suction cups 21, 22, 23, 24.

These two longitudinal lateral abutment surfaces 31a and 32a are positioned with respect to the suction cups 21, 22, 23, 24 so that in use they limit any rolling movements of the packaging FP around the aforesaid longitudinal axis X, induced by the displacement of the gripping head 11, 12.

Thanks to the present invention, it is possible to handle in a more flexible way flow pack packaging of long pasta using vacuum gripping devices, without however limiting the speed of the handling operations, and at the same time without causing tears to the film which forms the package nor breaking of the pasta.

This is made possible by the conformation of the vacuum gripping head 11 or 12 described above.

More in detail, compared to traditional vacuum gripping heads, and being equal pasta package to be handled (weight and dimensions), the vacuum gripping head 11 or 12 described above allows reducing the vacuum gripping force per surface unit that must exerted on the packaging FP to support it permanently, a necessary condition for handling the package.

The reduction of the vacuum gripping force per unit area is made possible primarily by the fact that the vacuum gripping force is developed on a gripping surface (defined by one or more suction cups, as will be discussed later) of elongated shape. The elongated shape of the vacuum gripping surface adapts to the shape of a flow pack packaging of long pasta, which has a prevalent longitudinal direction of development Y. In this way it is therefore possible to maximize the surface area of the package FP subject to the vacuum gripping force. Therefore, being equal the gripping force under vacuum exerted by the gripping head on the package, the specific vacuum gripping force (per unit area) decreases and therefore consequently the risk of tearing the film and/or breaking the pasta.

Secondly, the vacuum gripping force per surface unit is also reduced by the fact that the gripping head 11 or 12 ensures a stable grip with a reduced gripping force.

More in detail, the gripping head 11 or 12 according to the invention in fact allows reducing the dynamic stresses to which the package is subjected and which must be overcome by the force exerted by the gripping head.

In general, a vacuum gripping head must generate a gripping force sufficient to ensure a stable grip of the package not only in static conditions, but also in dynamic conditions that are more burdensome. The movements of the gripping head induce, in fact, oscillations on the package, which generate dynamic thrusts higher than the static forces.

In the case of a long pasta packaging retained by a gripping force substantially distributed along an axis (the longitudinal axis X of the gripping head), the oscillations induced on the packaging by the movements of the gripping head are substantially due to rolling movements around the aforementioned longitudinal axis X (substantially coinciding with the longitudinal development direction Y of the packaging).

Thanks to the present invention, the gripping head 11 or 12 limits the rolling movements of the packaging around this longitudinal axis X thanks to the aforesaid profiles 31 and 32 of which the gripping head 11 or 12 is provided. In this way, dynamic thrusts are limited and it is therefore possible to reduce the maximum vacuum gripping force that the gripping head must exert to ensure a stable grip of the packaging.

Each suction cup 21, 22, 23, 24 comprises a gripping cup 25 which defines a gripping lip 26. Preferably, as shown in particular in Figures 5 and 6, the aforementioned two profiles 31, 32 are positioned with respect to these suction cups in such a way that, at least when the gripping head 11, 12 does not act on a packaging FP, the gripping lip 26 of each of these suction cups protrudes with respect to the aforementioned longitudinal lateral abutment surfaces 31a and 32a.

Operationally, this configuration facilitates the gripping action of the suction cups 21, 22, 23, 24 on the flow pack FP.

According to the invention, as shown in figure 5, at least when the gripping head 11 or 12 does not act on a packaging FP, the gripping lip 26 of each of the suction cups 21, 22, 23, 24 protrudes with respect to the lower portion of the longitudinal lateral abutment surfaces 31a, 32a for a portion H comprised between 0.5 and 1.5 mm.

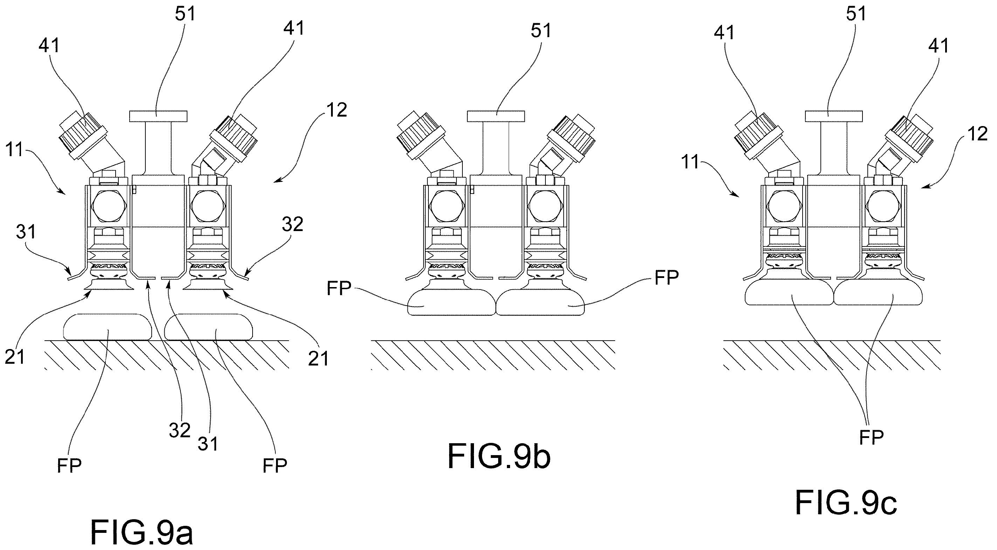

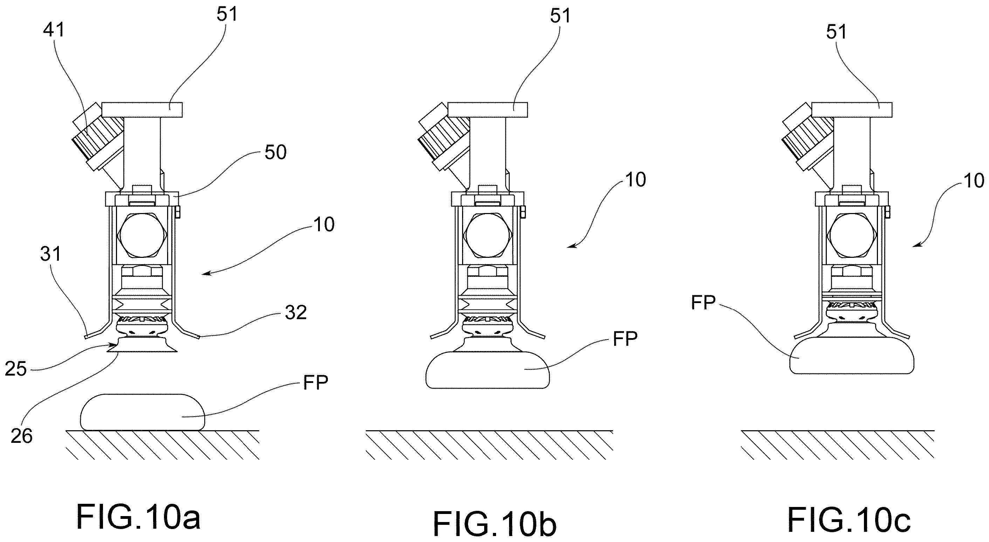

Operationally, as schematically shown in the sequences in figures 9a,b,c or 10a,b,c, when said at least one gripping head 11 or 12 acts in gripping on a packaging FP, the gripping lip 26 of each suction cup 21, 22, 23, 24 reduces its projection with respect to the longitudinal lateral abutment surfaces 31a, and 32a. This is due to the contraction of the suction cup itself, pressed by the packaging FP under the action of the vacuum. In this way, the distance between the abutment surfaces 31a and 32a and the packaging is reduced and possibly eliminated, accentuating the effect of limitation of the rolling movements of the packaging.

Preferably, as illustrated in the accompanying Figures, each of the aforementioned one or more suction cups 21, 22, 23, 24 is a bellows suction cup. The presence of the bellows allows the suction cup to adapt more easily to surfaces that are not perfectly flat, as can be the surfaces of a flow pack packaging FP of long pasta.

According to the preferred embodiment shown in the accompanying Figures, the aforementioned at least one vacuum gripping head 11 or 12 comprises two or more vacuum suction cups 21, 22, 23, 24.

Preferably, these two or more vacuum suction cups 21, 22, 23, 24 are aligned with each other along the aforesaid longitudinal axis X, to form a single row of suction cups. It is possible to provide embodiments in which the suction cups, although arranged along this longitudinal axis X, are not perfectly aligned along this axis.

In this case, the aforesaid vacuum gripping surface (elongated) is defined by the set of two or more distinct gripping areas, each defined by one of these suction cups. It is not necessary for the gripping surface to be continuous. On the contrary, it has been found experimentally that the implementation of such a surface with several distinct suction cups makes it possible to exercise the vacuum gripping action more effectively than a single suction cup.

Preferably, as illustrated in the accompanying figures, each of these two or more vacuum suction cups 21, 22, 23, 24 has a circular section gripping cup.

Advantageously, these two or more vacuum suction cups 21, 22, 23, 24 are identical to each other in order to offer a more uniform gripping action. However, it is possible to provide embodiments in which the suction cups differ in terms of shape and/or size.

Preferably, as shown in particular in Figure 8, the aforementioned two or more vacuum suction cups 21, 22, 23, 24 are all fluidically connected in parallel to a common duct 40, inside the vacuum gripping head 11 or 12.

Advantageously, this common duct 40 is fluidically connected alternatively to a vacuum source or to a compressed air source. For this purpose, the gripping head 11 or 12 is provided with a first attachment 41 for the fluidic connection to a vacuum source and a second attachment 42 for the fluidic connection to a source of compressed air.

Operationally, the introduction of compressed air into the duct 40 and therefore into the suction cups is functional to facilitate the detachment between the suction cups and the packaging FP during the release of the packaging by the gripping head 11 or 12.

According to an alternative embodiment, not shown in the accompanying Figures, the aforementioned at least one vacuum gripping head can comprise a single vacuum suction cup. In this case, the aforementioned vacuum gripping surface is defined only by this single suction cup.

Advantageously, this single suction cup has an elongated section gripping cup, preferably oval or rectangular, with a major axis parallel to the longitudinal axis X of the gripping head.

Similarly to the case of two or more suction cups, this single suction cup is fluidically connected alternatively to a vacuum source or to a compressed air source. For this purpose, the gripping head is provided with a first attachment for the fluidic connection to a vacuum source and a second attachment for the fluidic connection to a source of compressed air.

Preferably, the vacuum source (both in the case of a single suction cup and in the case of two or more suction cups) is defined by an aspirated vacuum generator.

Alternatively, the vacuum source (both in the case of a single suction cup and in the case of two or more suction cups) may also be defined by a blown vacuum generator.

According to the invention, said at least one gripping head 11 or 12 comprises a support body 50 to which said one or more suction cups 21, 22, 23, 24 are associated and said two profiles 31, 32. In particular, as illustrated in the accompanying Figures, the support body 50 is provided with a hooking appendage 51 for the aforementioned movement system 100.

According to the invention, as illustrated in the accompanying Figures, each of the profiles 31 and 32 is defined by a shaped plate 30, which is fixed at its upper portion to the support body 50 and extends downwards laterally to the suction cups, also acting as a protection element for the suction cups themselves. The relative abutment surface 31a or 32a is defined at a lower edge portion of the plate. This lower edge portion is shaped so as to be angled with respect to the main face of the plate.

In particular, as shown in the attached figures, and in particular in Figure 5, the lower edge portion of the shaped plate 30 which defines each profile 31 and 32 is shaped so as to be angled towards the outside with respect to the main face of the relative plate and with respect to the suction cups. Each of the two profiles 31 and 32 of a gripping head 11 and 12 is therefore defined by a fin protruding outwards with respect to the relative plate 30, which delimits the gripping head laterally. This conformation of the profiles 31, 32 and of the relative abutment surfaces make each gripping head 11 and 12 particularly suitable for handling packs of flow packs of long pasta FP.

According to the embodiment illustrated in the accompanying figures, the profiles 31 and 32 extend only in a longitudinal direction, on the sides of the gripping surface (i.e. on the sides of the suction cups). Alternative embodiments may be provided in which these profiles also extend to the two head ends of the gripping surface.

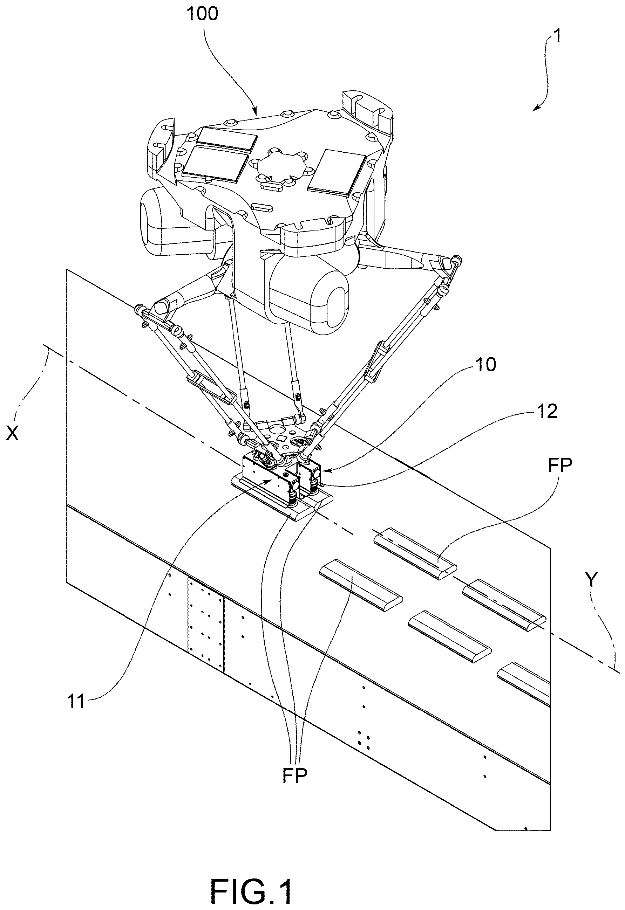

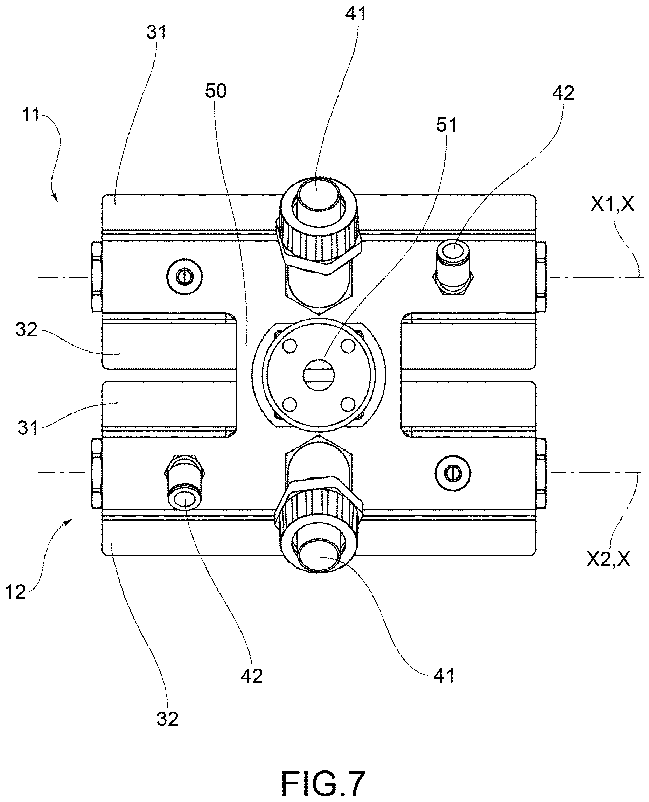

According to the embodiment illustrated in the accompanying figures 1 to 9, the manipulation apparatus 1 can comprise two twin gripping heads 11 and 12, which are both associated with the aforementioned movement system 100 and are arranged with the respective longitudinal axes X1 and X2 parallel to each other. These two twin gripping heads 11 and 12 form an integrated gripping device 10. Preferably, these two twin gripping heads 11 and 12 can be actuated in a mutually independent manner, so as to manage in a distinct manner the simultaneous handling of two flow pack packaging FP of long pasta.

More in detail, the aforementioned integrated gripping device 10 comprises a common support body 50, provided with a single hooking appendage 51 for the aforementioned movement system 100.

Each gripping head 11 and 12 is fluidically connectable to a vacuum source or to a source of compressed air independently of the other gripping head. For this purpose, each gripping head is provided with an independent vacuum and compressed air supply system to the suction cups. In particular, each gripping head is provided with its own duct 50 for distributing the vacuum (and compressed air, if provided) to the relative suction cups, as well as a first attachment 41 for the fluidic connection to a vacuum source and a second attachment 42 for the fluidic connection to a source of compressed air.

According to the embodiment illustrated in figures 10, the manipulation apparatus 1 can comprise a single gripping head 11, suitable for moving a single flow pack packaging FP of long pasta.

According to the embodiment shown in Figure 1, the aforementioned movement system 100 is a robotic system.

Preferably, the robotic system is of the delta robot type. A Delta robot is a type of parallel robot. It consists of three arms connected by universal joints to the base. The key feature of the design is the use of parallelogram in the arms, which maintain the orientation of the end device (in this case, the vacuum gripping heads). A delta robot is a system known to a man skilled in the art and will therefore not be described in greater detail.

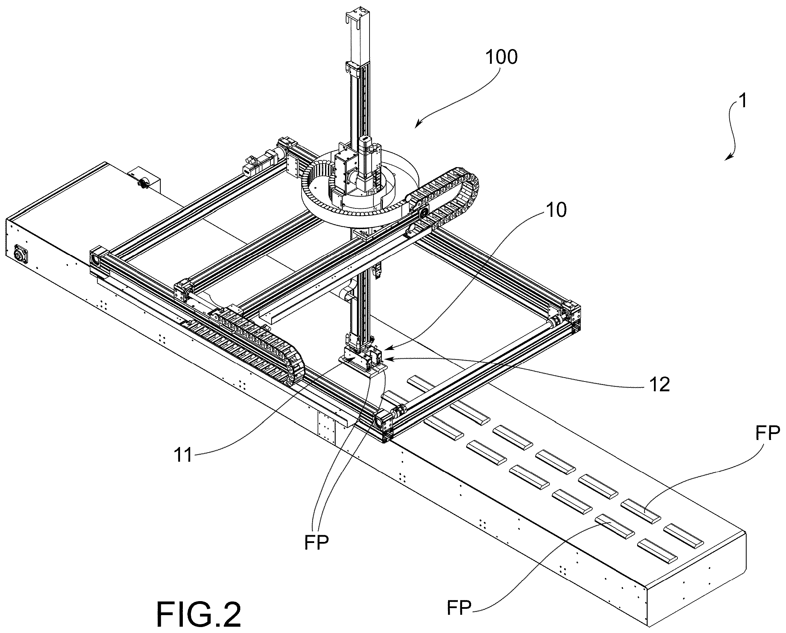

According to the alternative embodiment shown in Figure 2, the aforementioned movement system 100 can also be a Cartesian axis system.

Advantageously, the gripping head 11 or 12 according to the present invention is particularly suitable for being moved by a delta robot type manipulation system.

As is known, a delta robot type movement system allows much faster movements of a Cartesian axis system.

The ability of the gripping head 11, 12 to limit the rolling movements of the gripping package makes it possible to move it at high speeds and with sudden changes of direction, without affecting its grip stability and without the risk of damaging the flow pack packaging FP.

The vacuum gripping head 11, 12 according to the present invention therefore allows fully exploiting the potential offered by a delta robot-type handling system in the manipulation of flow pack packaging of long pasta.

Advantageously, the manipulation apparatus 1 is managed by an electronic control unit.

The object of the present invention is also a vacuum gripping head, designed to hold at least one flow pack packaging FP of pasta at a time and which can be associated with a movement system.

The aforementioned vacuum gripping head has the same features as the gripping head 11, 12 included in the manipulation apparatus 1 according to the invention, and in particular as described above.

For the sake of brevity, a complete description of the gripping head will not be presented again, but reference will be made to what has already been described above.

In the following synthetic description, for simplicity the same numerical references already used above will be used.

More in detail, the vacuum gripping head 11, 12 according to the invention comprises:
- one or more vacuum suction cups 21, 22, 23, 24 which define a vacuum gripping surface extending along a longitudinal axis X of said vacuum gripping head 11; 12; and
- two profiles 31, 32 extending longitudinally sideways to the aforementioned gripping surface, to define two longitudinal lateral abutment surfaces 31a; 32a for a flow pack packaging FP supported in gripping by the aforesaid one or more suction cups 21, 22, 23, 24.

Said two longitudinal lateral abutment surfaces 31a; 32a are positioned with respect to the suction cups 21, 22, 23, 24 so that in use they limit any rolling movements of the packaging around the aforesaid longitudinal axis X, induced by the displacement of the gripping head 11, 12.

The advantages offered by the invention already highlighted above by describing the manipulation apparatus 1 also apply to the vacuum gripping head and will not be repeated here for brevity of description.

The method for manipulating flow pack packaging of long pasta, in particular spaghetti, according to the invention will now be described.

Preferably, this manipulation method is implemented by means of a manipulation apparatus 1 according to the invention and already described above.

Each flow pack packaging of long pasta FP develops along a longitudinal direction of development Y, imposed by the elongated shape of the pasta.

More in detail, the method for handling flow packs packaging FP of pasta using a vacuum gripping head 11 or 12, provides for minimizing the vacuum gripping force per unit of surface area that the gripping head 11, 12 must exert on the flow pack packaging FP in order to steadily support it.

According to the invention, the vacuum gripping force per surface unit is minimized in two ways:
- extending the vacuum gripping surface of the gripping head 11, 12 along a longitudinal extension direction Y of the flow pack FP; and
- limiting the rolling movements of the packaging FP with respect to the gripping head 11, 12 about a longitudinal axis X of the gripping head itself.

In use, the longitudinal axis X of the gripping head is substantially parallel to the aforementioned longitudinal direction of development Y.

Advantageously, the limitation of the rolling movements of the packaging FP is obtained by providing the vacuum gripping head 11 or 12 with means for stabilizing the flow pack packaging.

In particular, the method for handling flow pack packaging of long pasta FP comprises in sequence the following operating steps:
a) preparing an apparatus for handling flow pack packaging FP which comprises: - at least one vacuum gripping head 11 or 12 designed to hold at least one flow pack packaging (FP) at a time; and - a movement system 100, which is associated with said at least one vacuum gripping head 11 or 12 and is suitable to move it in space;
b) bringing said vacuum gripping head 11 or 12 to grip at least one flow pack packaging FP of long pasta;
c) moving said vacuum gripping head 11 or 12 by means of said movement system 100 to modify the spatial position of the flow pack packaging FP of pasta.

According to the invention, the aforementioned at least one vacuum gripping head 11 or 12 comprises one or more vacuum suction cups 21, 22, 23, 24 which define a vacuum gripping surface extending along a longitudinal axis X of such a vacuum gripping head 11 or 12.

In the aforementioned step b) of the method, the vacuum gripping head 11 or 12 is taken on the flow pack packaging FP of long pasta orienting the gripping head 11 or 12 with respect to the packaging FP so that the gripping surface acts on a surface portion of the packaging and the longitudinal axis X of the gripping head is substantially parallel to the longitudinal direction of development Y of the flow pack packaging FP.

During the aforementioned said step c) of the method, any rolling movements of the packaging FP around the aforesaid longitudinal axis X induced by the displacement of the gripping head 11 and 12 are limited bringing the packaging FP into abutment against two profiles 31, 32 of the gripping head 11 or 12. These two profiles 31 and 32 extend longitudinally sideways to said gripping surface to define two longitudinal lateral abutment surfaces 31a and 32a.

Preferably, step c) of moving the gripping head 11 or 12 is carried out by means of a robotic system of the delta robot type.

The advantages offered by the invention already highlighted above by describing the manipulation apparatus 1 also apply to the handling method and will not be repeated here for brevity of description.

The invention allows several advantages to be achieved, some of them already described.

The apparatus and the method for manipulating flow pack packaging of long pasta, in particular spaghetti, according to the invention, allows manipulating in a more flexible manner such packaging using vacuum gripping devices, without however limiting the speed of the operations, nor causing tears to the film or breaking of the pasta.

In particular, the apparatus and the method according to the invention allow fully exploiting the potentialities offered by a robotic handling system of the delta robot type.

The apparatus according to the invention is easily manageable from an operational point of view. The apparatus does not in fact require the adoption of particular operational strategies. Thanks to the invention, the manipulation of the flow pack packaging of long pasta can, in fact, be carried out with less restrictions. This simplifies the operational management of the apparatus.

Finally, the apparatus according to the invention is of simple and cost-effective implementation, since it does not require the use of constructive components, neither complex nor expensive.

The invention thus conceived thus achieves the intended purposes.

Of course, it may take, in its practical embodiment, also shapes and configurations other than the above without departing from the present scope of protection.

Furthermore, all details may be replaced with technically equivalent elements and dimensions, shapes and materials used may be any according to the needs.

## Claims

1. Vacuum gripping head, designed to hold at least one flow pack packaging (FP) of pasta at a time and which can be associated with a movement system (100), **characterized in that** it comprises:
- one or more vacuum suction cups (21, 22, 23, 24) which define a vacuum gripping surface extending along a longitudinal axis (X) of said at least one vacuum gripping head (11 or 12); and
- two profiles (31, 32) extending longitudinally sideways to said gripping surface, to define two longitudinal lateral abutment surfaces (31a, 32a) for a flow pack packaging (FP) supported in gripping by said one or more suction cups (21, 22, 23, 24), wherein said two longitudinal lateral abutment surfaces (31a; 32a) are positioned with respect to said suction cups (21, 22, 23, 24) in such a way that in use they limit any rolling movements of said packaging around said longitudinal axis (X) induced by the displacement of said gripping head (11 or 12),
wherein said gripping head (11 or 12) comprises a support body (50), to which said one or more suction cups (21, 22, 23, 24) are associated, and said two profiles (31, 32),
wherein each of said profiles (31,32) is defined by a shaped plate (30), which is fixed at its upper portion to the support body (50) and extends downwards laterally to said one or more vacuum suction cups (21, 22, 23, 24), also acting as a protection element for the suction cups themselves,
**characterized in that** the relative abutment surface (31a;32a) of each of said two profiles (31,32) is defined at a lower edge portion of the plate, said lower edge portion being shaped so as to be angled with respect to a main face of the shaped plate (30).
wherein each suction cup (21, 22, 23, 24) comprises a gripping cup (25) which defines a gripping lip (26) and wherein said two profiles (31, 32) are positioned with respect to said suction cups (21, 22, 23, 24) in such a way that, at least when the gripping head (11 or 12) does not act on a packaging (FP), the gripping lip (26) of each said one or more suction cups (21, 22, 23, 24) protrudes with respect to said longitudinal lateral abutment surfaces (31a, 32a).

2. Apparatus for manipulating flow pack packaging (FP) of long pasta, comprising:
- at least one vacuum gripping head (11 or 12) according to claim 1, designed to hold at least one packaging (FP) of long pasta at a time; and
- a movement system (100), which is associated with said at least one vacuum gripping head (11 or 12) and is suitable to move it in space.

3. Apparatus according to claim 2, wherein, at least when the gripping head (11 or 12) does not act on a packaging (FP), the gripping lip (26) of each of said suction cups (21, 22, 23, 24) protrudes with respect to the lower portion of said longitudinal lateral abutment surfaces (31a, 32a) for a portion (H) comprised between 0.5 and 1.5 mm.

4. Apparatus according to claim 2 or 3, wherein, when said at least one gripping head (11 or 12) acts in gripping on a packaging, the gripping lip (26) of each suction cup (21, 22, 23, 24) reduces its projection with respect to said longitudinal lateral abutment surfaces (31a, 32a).

5. Apparatus according to one or more of the preceding claims 2 to 4, in which each of said one or more suction cups (21, 22, 23, 24) is a bellows suction cup.

6. Apparatus according to one or more of the preceding claims 2 to 5, in which said at least one vacuum gripping head (11 or 12) comprises two or more vacuum suction cups (21, 22, 23, 24), preferably aligned with each other along said longitudinal axis (X), and wherein said vacuum gripping surface is defined by the set of two or more distinct gripping areas, each defined by one of said two or more suction cups.

7. Apparatus according to claim 6, wherein each of said two or more vacuum suction cups (21, 22, 23, 24) has a circular section gripping cup.

8. Apparatus according to claim 6 or 7, wherein said two or more vacuum suction cups (21, 22, 23, 24) are equal on to each other.

9. Apparatus according to claim 6, 7 or 8, wherein said two or more vacuum suction cups (21, 22, 23, 24) are all fluidically connected in parallel to a common duct (40) inside said at least one vacuum gripping head (11 or 12) and wherein said common duct (40) is fluidically connected alternatively to a vacuum source or to a compressed air source.

10. Apparatus according to one or more of the claims from 2 to 5, wherein said at least one vacuum gripping head (11 or 12) comprises a single vacuum suction cup and wherein said vacuum gripping surface is defined only by said single suction cup.

11. Apparatus according to claim 10, wherein said single suction cup has a gripping cup with an elongated section, preferably oval or rectangular, with its longest axis parallel to said longitudinal direction (X).

12. Apparatus according to claim 10 or 11, wherein said single suction cup is fluidically connected alternatively to a vacuum source or to a compressed air source.

13. Apparatus according to claim 9 or 12, wherein said vacuum source is defined by an aspirated vacuum generator.

14. Apparatus according to one or more of the preceding claims 2 to 13, wherein said at least one gripping head (11 or 12) comprises a support body (50) to which said one or more suction cups (21, 22, 23, 24) are associated and said two profiles (31, 32).

15. Apparatus according to one or more of the preceding claims 2 to 14, comprising two twin gripping heads (11, 12), which are both associated with said movement system (100) and are arranged with the respective longitudinal axes (X1, X2) parallel to each other, said two twin gripping heads (11, 12) forming an integrated gripping device (10), preferably said two twin gripping heads being operable in gripping independently of each other.

16. Apparatus according to one or more of the preceding claims 2 to 15, in which said movement system (100) is a robotised system, preferably of the delta robot type.

17. Apparatus according to one or more of the claims from 2 to 15, wherein said movement system (100) is a Cartesian coordinate crane system.

18. Method for handling flow pack packagings (FP) of pasta, each flow pack (FP) extending along a longitudinal extension direction (Y), said method comprising in sequence the following operating steps:
a) preparing an apparatus for handling flow pack packagings (FP) which comprises: - at least one vacuum gripping head (11 or 12) designed to hold at least one flow pack packaging (FP) at a time; and - a movement system (100), which is associated with said at least one vacuum gripping head (11 or 12) and is suitable to move it in space;
b) bringing said vacuum gripping head (11 or 12) to grip at least one flow pack packaging (FP) of long pasta;
c) moving said vacuum gripping head (11 or 12) by means of said movement system (100) to modify the spatial position of said at least one flow pack packaging (FP) of pasta,
**characterized in that** said at least one vacuum gripping head (11 or 12) comprises one or more vacuum suction cups (21, 22, 23, 24) which define a vacuum gripping surface extending along a longitudinal axis (X) of said at least one vacuum gripping head (11 or 12), wherein in said step b) said vacuum gripping head (11 or 12) is brought to grip said flow pack packaging (FP) of long pasta orientating the gripping head (11 or 12) with respect to the packaging (FP) so that said gripping surface acts on a surface portion of said packaging and the longitudinal axis (X) of said gripping head is substantially parallel to the longitudinal extension direction(Y) of said flow pack packaging (FP), and
**in that** during said movement step c), any rolling movements of said flow pack (FP) around said longitudinal axis (X) induced by the displacement of said gripping head (11 or 12) are limited by bringing said flow pack packaging (FP) into abutment against two profiles (31, 32) of said gripping head (11 or 12) which longitudinally extend laterally to said gripping surface to define two longitudinal lateral abutment surfaces (31a, 32a), wherein said apparatus for manipulating flow pack packagings (FP) is an apparatus according to one or more of the claims from 2 to 17.

## Patentansprüche

1. Vakuum-Greifkopf, der ausgelegt ist, jeweils mindestens eine Flowpack-Verpackung (FP) für Teigwaren zu halten und der einem Bewegungssystem (100) zugeordnet werden kann, **dadurch gekennzeichnet, dass** er umfasst:
- eine oder mehrere Vakuumsaugnäpfe (21, 22, 23, 24), die eine Vakuum-Greiffläche definieren, die sich entlang einer Längsachse (X) des mindestens einen Vakuum-Greifkopfes (11 oder 12) erstreckt; und
- zwei Profile (31, 32), die sich seitlich längs zu der Greiffläche erstrecken, um zwei seitliche Längsanlageflächen (31a, 32a) für eine Flowpack-Verpackung zu definieren, die in Greifposition durch eine oder mehrere Saugnäpfe (21, 22, 23, 24) gehalten wird, wobei die zwei seitlichen Längsanlageflächen (31a; 32a) in Bezug auf die Saugnäpfe (21, 22, 23, 24) angeordnet sind, sodass sie im Gebrauch jede Rollbewegung der Verpackung um die Längsachse (X), die durch die Bewegung des Greifkopfes (11 oder 12) verursacht wird, begrenzen,
wobei der Greifkopf (11 oder 12) einen Stützkörper (50) umfasst, dem die eine oder mehrere Saugnäpfe (21, 22, 23, 24) zugeordnet sind, und die zwei Profile (31, 32),
wobei jedes der Profile (31, 32) durch eine geformte Platte (30) definiert wird, die mit ihrem oberen Abschnitt an dem Stützkörper (50) befestigt wird und sich seitlich nach unten zu dem einen oder mehreren Saugnäpfen (21, 22, 23, 24) erstreckt, wobei sie ebenfalls als Schutzelement für die Saugnäpfe dient,
**dadurch gekennzeichnet, dass** die jeweilige Anlagefläche (31a; 32a) jedes der beiden Profile (31, 32) in dem unteren Randabschnitt der Platte definiert wird, wobei der untere Randabschnitt ausgebildet ist, sodass er gegenüber einer Hauptfläche der geformten Platte (30) geneigt angeordnet ist.
wobei jeder Saugnapf (21, 22, 23, 24) eine Greifkappe (25) umfasst, die eine Greiflippe (26) definiert, und wobei die beiden Profile (31, 32) in Bezug auf die Saugnäpfe (21, 22, 23, 24) positioniert sind, sodass mindestens, wenn der Greifkopf (11 oder 12) nicht auf eine Verpackung (FP) wirkt, die Greiflippe (26) der einen oder mehreren Saugnäpfe (21, 22, 23, 24) gegenüber den seitlichen Längsanlageflächen (31a, 32a) vorsteht.

2. Vorrichtung zur Manipulation von Flowpack-Verpackungen (FP) für Langteigwaren, umfassend:
- mindestens einen Vakuum-Greifkopf (11 oder 12) nach Anspruch 1, der ausgelegt ist, jeweils mindestens eine Verpackung (FP) für Langteigwaren zu halten; und
- ein Bewegungssystem (100), das dem mindestens einen Vakuum-Greifkopf (11 oder 12) zugeordnet ist und das geeignet ist, diesen im Raum zu bewegen.

3. Vorrichtung nach Anspruch 2, wobei mindestens, wenn der Greifkopf (11 oder 12) nicht auf eine Verpackung (FP) wirkt, die Greiflippe (26) jedes der Saugnäpfe (21, 22, 23, 24) in Bezug auf den unteren Abschnitt der seitlichen Längsanlageflächen (31a, 32a) um einen Abschnitt (H) vorsteht, der von 0,5 bis 1,5 mm ist

4. Vorrichtung nach Anspruch 2 oder 3, wobei, wenn der mindestens eine Greifkopf (11 oder 12) wirkt, indem er eine Verpackung greift, die Greiflippe (26) jedes Saugnapfes (21, 22, 23, 24) seinen Vorsprung in Bezug auf die seitlichen Längsanlageflächen (31a, 32a) reduziert.

5. Vorrichtung nach einem oder mehreren der vorhergehenden Ansprüche 2 bis 4, wobei jeder der einen oder mehreren Saugnäpfe (21, 22, 23, 24) ein Balg-Saugnapf ist.

6. Vorrichtung nach einem oder mehreren der vorhergehenden Ansprüche 2 bis 5, wobei der mindestens eine Vakuum-Greifkopf (11 oder 12) zwei oder mehrere Vakuumsaugnäpfe (21, 22, 23, 24) umfasst, die vorzugsweise entlang der Längsachse (X) zueinander ausgerichtet sind, und wobei die Vakuum-Greiffläche durch die Gesamtheit von zwei oder mehreren separaten Greifbereichen definiert wird, von denen jeder durch einen der Saugnäpfe gebildet wird.

7. Vorrichtung nach Anspruch 6, wobei jeder der zwei oder mehrere Vakuumsaugnäpfe (21, 22, 23, 24) eine Greifkappe mit kreisförmigem Schnitt aufweist.

8. Vorrichtung nach Anspruch 6 oder 7, wobei die zwei oder mehrere Vakuumsaugnäpfe (21, 22, 23, 24) untereinander gleich sind.

9. Vorrichtung nach Anspruch 6, 7 oder 8, wobei die zwei oder mehrere Vakuumsaugnäpfe (21, 22, 23, 24) alle fluidisch parallel an eine gemeinsame Leitung (40) innen des mindestens einen Vakuum-Greifkopfs (11 oder 12) verbunden sind und wobei die gemeinsame Leitung (40) fluidisch wahlweise mit einer Vakuumquelle oder einer Druckluftquelle verbunden ist.

10. Vorrichtung nach einem oder mehreren der Ansprüche 2 bis 5, wobei der mindestens eine Vakuum-Greifkopf (11 oder 12) einen einzigen Vakuumsaugnapf umfasst und wobei die Vakuum-Greiffläche ausschließlich durch diesen einzelnen Saugnapf definiert wird.

11. Vorrichtung nach Anspruch 10, wobei der einzelne Saugnapf eine Greifkappe mit einem länglichen Abschnitt, vorzugsweise oval oder rechteckig, aufweist, wobei sich dessen Längsachse parallel zu der Längsrichtung (X) erstreckt.

12. Vorrichtung nach Anspruch 10 oder 11, wobei der einzelne Saugnapf fluidisch wahlweise mit einer Vakuumquelle oder einer Druckluftquelle verbunden ist.

13. Vorrichtung nach Anspruch 9 oder 12, wobei die Vakuumquelle durch einen gesaugten Vakuumerzeuger definiert wird.

14. Vorrichtung nach einem oder mehreren der vorhergehenden Ansprüche 2 bis 13, wobei der mindestens eine Greifkopf (11 oder 12) einen Stützkörper (50) umfasst, an dem die eine oder mehrere Saugnäpfe (21, 22, 23, 24) und die zwei Profile (31, 32) zugeordnet sind.

15. Vorrichtung nach einem oder mehreren der vorhergehenden Ansprüche 2 bis 14, umfassend zwei Zwillings-Greifköpfe (11, 12), die beide dem Bewegungssystem (100) zugeordnet sind und die mit den jeweiligen Längsachsen (X1, X2), die zueinander parallel sind, angeordnet sind, wobei die zwei Zwillings-Greifköpfe (11, 12) eine integrierte Greifvorrichtung (10) bilden, vorzugsweise wobei die beiden Zwillings-Greifköpfe unabhängig voneinander beim Greifen betätigbar sind.

16. Vorrichtung nach einem oder mehreren der vorhergehenden Ansprüche 2 bis 15, wobei das Bewegungssystem (100) ein robotisiertes System ist, vorzugsweise vom Delta-Roboter-Typ.

17. Vorrichtung nach einem oder mehreren der Ansprüche 2 bis 15, wobei das Bewegungssystem (100) ein kartesisches Koordinaten-Kransystem.

18. Verfahren zur Manipulation von Flowpack-Verpackungen (FP) für Teigwaren, wobei jede Flowpack-Verpackung (FP) sich entlang einer Längserstreckungsrichtung (Y) erstreckt, wobei das Verfahren folgende aufeinanderfolgende Verfahrensschritte umfasst:
a) Bereitstellen einer Vorrichtung zur Manipulation von Flowpack-Verpackungen (FP), die umfasst: - mindestens einen Vakuum-Greifkopf (11 oder 12), der ausgelegt ist, jeweils mindestens eine Flowpack-Verpackung (FP) zu halten; und - ein Bewegungssystem (100), das dem mindestens einen Vakuum-Greifkopf (11 oder 12) zugeordnet ist und geeignet ist, diesen im Raum zu bewegen;
b) Veranlassen des Vakuum-Greifkopfs (11 oder 12), mindestens eine Flowpack-Verpackung (FP) für Langteigwaren zu greifen;
c) Bewegen des Vakuum-Greifkopfs (11 oder 12) mittels des Bewegungssystems (100), um die räumliche Position der mindestens einen Flowpack-Verpackung (FP) für Teigwaren zu verändern,
**dadurch gekennzeichnet, dass** der mindestens eine Vakuum-Greifkopf (11 oder 12) eine oder mehrere Vakuumsaugnäpfe (21, 22, 23, 24) umfasst, die eine Vakuum-Greiffläche definieren, die sich entlang einer Längsachse (X) des mindestens einen Vakuum-Greifkopfs (11 oder 12) erstreckt, wobei in Schritt b) der Vakuum-Greifkopf (11 oder 12) veranlasst wird, die Flowpack-Verpackung (FP) für Langteigwaren zu greifen, indem der Greifkopf (11 oder 12) in Bezug auf die Verpackung (FP) ausgerichtet wird, sodass die Greiffläche auf einen Oberflächenabschnitt der Verpackung wirkt und die Längsachse (X) des Greifkopfs im Wesentlichen parallel zur Längserstreckungsrichtung (Y) der Flowpack-Verpackung (FP) ist, und
dass während des Bewegungsschritts c) jede Rollbewegungen der Flowpack-Verpackung (FP) um die Längsachse (X), die durch die Bewegung des Greifkopfs (11 oder 12) verursacht werden, begrenzt werden, indem die Flowpack-Verpackung (FP) gegen zwei Profile (31, 32) des Greifkopfs (11 oder 12), die sich längs zu der Greiffläche erstrecken, in Anlage gebracht wird, um zwei seitliche Längsanlageflächen (31a, 32a) zu definieren, wobei die Vorrichtung zur Manipulation von Flowpack-Verpackungen (FP) eine Vorrichtung nach einem oder mehreren der Ansprüche 2 bis 17 ist.

## Revendications

1. Tête de préhension par le vide, conçue pour maintenir au moins un emballage flow-pack (FP) de pâtes à la fois et pouvant être associée à un système de déplacement (100), **caractérisée en ce qu'**elle comprend :
- une ou plusieurs ventouses à vide (21, 22, 23, 24) qui définissent une surface de préhension par le vide s'étendant selon un axe longitudinal (X) de ladite au moins une tête de préhension par le vide (11 ou 12) ; et
- deux profils (31, 32) s'étendant longitudinalement sur les côtés de ladite surface de préhension, pour définir deux surfaces longitudinales latérales d'appui (31a, 32a) pour un emballage flow-pack (FP) maintenu en préhension par ladite une ou plusieurs ventouses (21, 22, 23, 24), lesdites deux surfaces longitudinales latérales d'appui (31a ; 32a) étant positionnées par rapport auxdites ventouses (21, 22, 23, 24) de telle sorte qu'en utilisation elles limitent tout mouvement de roulis dudit emballage autour dudit axe longitudinal (X) induit par le déplacement de ladite tête de préhension (11 ou 12),
ladite tête de préhension (11 ou 12) comprenant un corps de support (50), auquel sont associées lesdites une ou plusieurs ventouses (21, 22, 23, 24), et lesdits deux profils (31, 32),
chacun desdits profils (31, 32) étant défini par une plaque formée (30), qui est fixée dans sa partie supérieure au corps de support (50) et s'étend vers le bas latéralement auxdites une ou plusieurs ventouses à vide (21, 22, 23, 24), agissant également comme élément de protection pour lesdites ventouses elles-mêmes,
**caractérisée en ce que** la surface d'appui correspondante (31a ; 32a) de chacun desdits deux profils (31, 32) est définie au niveau d'une portion de bord inférieur de la plaque, ladite portion de bord inférieur étant formée de manière à être inclinée par rapport à une face principale de la plaque formée (30).
chaque ventouse (21, 22, 23, 24) comprenant une coupelle de préhension (25) qui définit une lèvre de préhension (26), et lesdits deux profils (31, 32) étant positionnés par rapport auxdites ventouses (21, 22, 23, 24) de telle manière qu'au moins lorsque la tête de préhension (11 ou 12) n'agit pas sur un emballage (FP), la lèvre de préhension (26) de chacune desdites une ou plusieurs ventouses (21, 22, 23, 24) fait saillie par rapport auxdites surfaces longitudinales latérales d'appui (31a, 32a).

2. Appareil de manipulation d'emballages flow-pack (FP) de pâtes longues, comprenant :
- au moins une tête de préhension par le vide (11 ou 12) selon la revendication 1, conçue pour maintenir au moins un emballage (FP) de pâtes longues à la fois ; et
- un système de déplacement (100), qui est associé audit au moins une tête de préhension par le vide (11 ou 12) et est apte à la déplacer dans l'espace.

3. Appareil selon la revendication 2, dans lequel, au moins lorsque la tête de préhension (11 ou 12) n'agit pas sur un emballage (FP), la lèvre de préhension (26) de chacune desdites ventouses (21, 22, 23, 24) fait saillie par rapport à la portion inférieure desdites surfaces longitudinales latérales d'appui (31a, 32a) pour une portion (H) comprise entre 0,5 et 1,5 mm.

4. Appareil selon la revendication 2 ou 3, dans lequel, lorsque ladite au moins une tête de préhension (11 ou 12) agit en préhension sur un emballage, la lèvre de préhension (26) de chaque ventouse (21, 22, 23, 24) réduit sa saillie par rapport auxdites surfaces longitudinales latérales d'appui (31a, 32a).

5. Appareil selon l'une ou plusieurs des revendications précédentes 2 à 4, dans lequel chacune desdites une ou plusieurs ventouses (21, 22, 23, 24) est une ventouse à soufflet.

6. Appareil selon l'une ou plusieurs des revendications précédentes 2 à 5, dans lequel ladite au moins une tête de préhension par le vide (11 ou 12) comprend deux ou plusieurs ventouses à vide (21, 22, 23, 24), de préférence alignées entre elles le long dudit axe longitudinal (X), et dans lequel ladite surface de préhension par le vide est définie par l'ensemble de deux ou plusieurs zones de préhension distinctes, chacune définie par l'une desdites deux ou plusieurs ventouses.

7. Appareil selon la revendication 6, dans lequel chacune desdites deux ou plusieurs ventouses à vide (21, 22, 23, 24) présente une coupelle de préhension de section circulaire.

8. Appareil selon la revendication 6 ou 7, dans lequel lesdites deux ou plusieurs ventouses à vide (21, 22, 23, 24) sont identiques entre elles.

9. Appareil selon la revendication 6, 7 ou 8, dans lequel lesdites deux ou plusieurs ventouses à vide (21, 22, 23, 24) sont toutes connectées fluidiquement en parallèle à un conduit commun (40) à l'intérieur dudit au moins une tête de préhension par le vide (11 ou 12) et dans lequel ledit conduit commun (40) est connecté fluidiquement alternativement à une source de vide ou à une source d'air comprimé.

10. Appareil selon l'une ou plusieurs des revendications 2 à 5, dans lequel ledit au moins une tête de préhension par le vide (11 ou 12) comprend une seule ventouse à vide et dans lequel ladite surface de préhension par le vide est définie uniquement par ladite ventouse unique.

11. Appareil selon la revendication 10, dans lequel ladite ventouse unique présente une coupelle de préhension à section allongée, de préférence ovale ou rectangulaire, avec son axe le plus long parallèle audit sens longitudinal (X).

12. Appareil selon la revendication 10 ou 11, dans lequel ladite ventouse unique est connectée fluidiquement alternativement à une source de vide ou à une source d'air comprimé.

13. Appareil selon la revendication 9 ou 12, dans lequel ladite source de vide est définie par un générateur de vide aspirant.

14. Appareil selon l'une ou plusieurs des revendications précédentes 2 à 13, dans lequel ledit au moins une tête de préhension (11 ou 12) comprend un corps de support (50) auquel sont associées lesdites une ou plusieurs ventouses (21, 22, 23, 24) et lesdits deux profils (31, 32).

15. Appareil selon l'une ou plusieurs des revendications précédentes 2 à 14, comprenant deux têtes de préhension jumelles (11, 12), qui sont toutes deux associées audit système de déplacement (100) et sont disposées avec les axes longitudinaux respectifs (X1, X2) parallèles l'un à l'autre, lesdites deux têtes de préhension jumelles (11, 12) formant un dispositif de préhension intégré (10), de préférence lesdites deux têtes de préhension jumelles étant aptes à fonctionner en préhension indépendamment l'une de l'autre.

16. Appareil selon l'une ou plusieurs des revendications précédentes 2 à 15, dans lequel ledit système de déplacement (100) est un système robotisé, de préférence du type robot delta.

17. Appareil selon l'une ou plusieurs des revendications 2 à 15, dans lequel ledit système de déplacement (100) est un système de pont à coordonnées cartésiennes.

18. Procédé de manipulation d'emballages flow-pack (FP) de pâtes, chaque flow-pack (FP) s'étendant selon une direction d'extension longitudinale (Y), ledit procédé comprenant en séquence les étapes de fonctionnement suivantes :
a) préparation d'un appareil pour la manipulation d'emballages flow-pack (FP) qui comprend : - au moins une tête de préhension par le vide (11 ou 12) conçue pour maintenir au moins un emballage flow-pack (FP) à la fois ; et - un système de déplacement (100), qui est associé audit au moins une tête de préhension par le vide (11 ou 12) et est apte à la déplacer dans l'espace ;
b) amener ladite tête de préhension par le vide (11 ou 12) à saisir au moins un emballage flow-pack (FP) de pâtes longues ;
c) déplacer ladite tête de préhension par le vide (11 ou 12) au moyen dudit système de déplacement (100) pour modifier la position spatiale dudit au moins un emballage flow-pack (FP) de pâtes,
**caractérisé en ce que** ledit au moins une tête de préhension par le vide (11 ou 12) comprend une ou plusieurs ventouses à vide (21, 22, 23, 24) qui définissent une surface de préhension par le vide s'étendant selon un axe longitudinal (X) dudit au moins une tête de préhension par le vide (11 ou 12), dans lequel à ladite étape b) ladite tête de préhension par le vide (11 ou 12) est amenée à saisir ledit emballage flow-pack (FP) de pâtes longues en orientant la tête de préhension (11 ou 12) par rapport à l'emballage (FP) de sorte que ladite surface de préhension agisse sur une portion de surface dudit emballage et que l'axe longitudinal (X) de ladite tête de préhension soit sensiblement parallèle à la direction d'extension longitudinale (Y) dudit emballage flow-pack (FP),
et **en ce que** durant ladite étape de déplacement c), tout mouvement de roulis dudit flow-pack (FP) autour dudit axe longitudinal (X) induit par le déplacement de ladite tête de préhension (11 ou 12) est limité en amenant ledit emballage flow-pack (FP) en appui contre deux profils (31, 32) de ladite tête de préhension (11 ou 12) qui s'étendent longitudinalement latéralement à ladite surface de préhension pour définir deux surfaces longitudinales latérales d'appui (31a, 32a), dans lequel ledit appareil de manipulation d'emballages flow-pack (FP) est un appareil selon l'une ou plusieurs des revendications 2 à 17.
